# EUROPÄISCHE PATENTANMELDUNG

(11) **EP 1 033 228 A2**
(43) Veröffentlichungstag der Anmeldung: **06.09.2000**
(21) Anmeldenummer: 00103519.5
(22) Anmeldetag: 18.02.2000
(51) Int. Cl.: B29C 59/02, B29C 59/04, E21D 11/00

(54) **Kunststoffbahn zur Verwendung im Tiefbau**

(30) Priorität: 26.02.1999 DE 19908691
(71) Anmelder: A.+E. Ungricht GmbH & Co. KG, 41068 Mönchengladbach (DE)
(72) Erfinder: Ungricht, Markus, 41334 Nettetal (DE); Schlütter, Aloys, 47906 Kempen (DE)
(74) Vertreter: Lau-Loskill, Philipp, Dipl.-Phys.

(57) **Zusammenfassung**

Es wird eine Kunststoffbahn zur Verwendung im Tiefbau, insbesondere zur Basis- oder Endabdeckung einer Deponie, mit einer auf der Vorder- und/oder Rückfläche der Kunststoffbahn angeordneten Strukturierung, die eine Vielzahl von über die Fläche verteilten und hierüber herausragenden Stegen und eine Vielzahl von über den Stegen noch hinausragenden Erhebungen aufweist, beschrieben. Hierbei sind die Erhebungen (3) im Bereich der Stege (2) angeordnet. Es wird ferner eine Prägewalze zur Herstellung einer Kunststoffbahn zur Verwendung im Tiefbau, insbesondere zur Basis- oder Endabdeckung einer Deponie, mit einer auf dem Mantel der Prägewalze angeordneten Strukturierung, beschrieben. Der Mantel (1) der Prägewalze weist eine Vielzahl von ersten stegförmig ausgebildeten Vertiefungen (8) sowie eine Vielzahl von zweiten Vertiefungen (9) auf, wobei die zweiten Vertiefungen (9) eine größere Gravurtiefe als die ersten Vertiefungen (8) besitzen und die zweiten Vertiefungen (9) im Bereich der ersten Vertiefungen (8) angeordnet sind.

## Beschreibung

Die vorliegende Erfindung betrifft eine Kunststoffbahn zur Verwendung im Tiefbau, insbesondere eine Kunststoffbahn zur Basis- oder Endabdeckung einer Deponie, mit den Merkmalen des Oberbegriffs des Patentanspruchs 1 und eine Prägewalze zur Herstellung einer Kunststoffbahn mit den Merkmalen des Oberbegriffs des Patentanspruchs 23.

Kunststoffbahnen zur Verwendung im Tiefbau, insbesondere für die Basis- oder Endabdeckung einer Deponie, sind in mannigfacher Ausgestaltung bekannt. So werden derartige Kunststoffbahnen üblicherweise auf der Vorder- und/oder der Rückfläche strukturiert, wobei diese Strukturierung verhindern soll, daß bei einer Verlegung der Kunststoffbahn im Böschungsbereich ein unerwünschtes Verrutschen dieser Kunststoffbahn relativ zum Untergrund oder ein unerwünschtes Verrutschens des auf die Kunststoffbahn aufgebrachten Schüttgutes stattfindet. Mit anderen Worten bewirkt eine derartige Strukturierung, daß die Reibungskräfte zwischen dem Untergrund und der aufliegenden Kunststoffbahn oder die Reibungskräfte zwischen der Kunststoffbahn und dem darauf angeordneten Schüttgut vergrößert werden, so daß hierdurch eine lagerfeste Fixierung der einmal verbauten Kunststoffbahn sichergestellt ist.

Um eine derartige Verbesserung der Reibungsverhältnisse auf der Vorder- und/oder Rückfläche der Kunststoffbahn zu erreichen, schlägt die DE 44 10 648 A1 vor, auf der Vorder- und/oder der Rückfläche der Kunststoffbahn eine Vielzahl von über die Flächen verteilte und hierüber hinausragende Stege vorzusehen.

In der Beschreibungseinleitung zur DE 44 10 648 werden darüber hinaus noch weitere strukturierte Oberflächen von entsprechenden Kunststoffbahnen beschrieben, wobei hier u.a. auch eine Kunststoffbahn aufgeführt ist, deren Oberfläche eine rauhe Profilierung, hergestellt in einem Koextrusionsverfahren, aufweist.

Eine Kunststoffbahn mit den Merkmalen des Oberbegriffs des Patentanspruchs 1 ist ebenfalls aus der Beschreibungseinleitung zur DE 44 10 648 A zu entnehmen. Hierbei weist die dort beschriebene Kunststoffbahn auf der Oberseite, die in der vorliegenden Anmeldung als Vorderseite bezeichnet wird, eine Wabenstruktur auf, wobei innerhalb der Waben Noppen vorhanden sind, die über die Ebene der Waben hinausragen. Mit anderen Worten weist somit diese bekannte Kunststoffbahn eine erste Ebene, die von der Vorderfläche oder Rückfläche der Kunststoffbahn selbst gebildet wird, eine hierüber hinausragende zweite Ebene, die von den Waben gebildet wird, und eine über die Waben hinausragende dritte Ebene auf, die von den mittig innerhalb der Waben angeordneten Noppen ausgebildet ist. Bei einer derartig bekannten Kunststoffbahn sollten jedoch nur sehr geringe Reibungskräfte zwischen einem hierauf aufgetragenen Geovlies und der entsprechend strukturierten Fläche vorhanden sein, so daß die bekannte Folie insbesondere auch im Böschungsbereich nicht die erforderliche Lage- bzw. Standsicherheit zur Verfügung stellt.

Der vorliegenden Erfindung liegt die Aufgabe zugrunde, eine Kunststoffbahn für die Verwendung im Tiefbau der angegebenen Art zur Verfügung zu stellen, die auch bei entsprechend hohen Böschungswinkeln eine besonders gute Stand- bzw. Lagersicherheit besitzt.

Diese Aufgabe wird erfindungsgemäß durch eine Kunststoffbahn mit den kennzeichnenden Merkmalen des Patentanspruchs 1 gelöst.

Die erfindungsgemäße Kunststoffbahn zur Verwendung im Tiefbau, insbesondere zur Basis- oder Endabdeckung einer Deponie, weist auf ihrer Vorder- und/oder Rückfläche eine Strukturierung auf, wobei diese Strukturierung eine Vielzahl von über die Flächen (Vorder- und/oder Rückfläche) verteilten und hierüber herausragenden Stegen und eine Vielzahl von über die Stege noch weiter hinausragenden Erhebungen umfaßt. Diese Erhebungen bei der erfindungsgemäßen Kunststoffbahn sind, im Gegensatz zum vorstehend genannten Stand der Technik, nicht in der Mitte der von der Stegen umrandeten Flächen sondern ausschließlich im Bereich der Stege angeordnet.

Die erfindungsgemäße Kunststoffbahn weist eine Reihe von Vorteilen auf. So ist zunächst festzuhalten, daß die erfindungsgemäße Kunststoffbahn hervorragende Ergebnisse bezüglich des Reibungsverhaltens ergibt, so daß die erfindungsgemäße Kunststoffbahn auch bei extrem großen Böschungswinkeln, insbesondere bei Böschungssteigungswinkeln im Bereich zwischen 21° und 35°, eine einwandfreie Stand- bzw. Lagefestigkeit besitzt, so daß auch ein Verrutschen der erfindungsgemäßen Kunststoffbahn auf entsprechend geneigten Flächen gegenüber bindigen und insbesondere nicht bindigen Erdstoffen nicht stattfindet. Wird zudem noch die erfindungsgemäße Kunststoffbahn mit der zuvor beschriebenen Strukturierung nicht nur auf der Rück- sondern auch auf der Vorderfläche versehen, so läßt sich die erfindungsgemäße Kunststoffbahn ebenfalls dann störungsfrei zur Abdeckung bzw. Abdichtung verwenden, wenn auf die erfindungsgemäße Kunststoffbahn eine Aufschüttung, so insbesondere ein bindiger oder nicht bindiger Erdstoff oder das ansonsten zu deponierende Schüttgut, aufgetragen wird. Diese hervorragende Lagefixierung der auf die erfindungsgemäße Kunststoffbahn aufgetragenen Güter wird auch dann erreicht, wenn zwischen dem jeweiligen Schüttgut (beispielsweise bindige oder nicht bindige Erdstoffe, zu deponierendes Gut, insbesondere Müll) und der erfindungsgemäßen Kunststoffbahn ein Geotextil als Schutzschicht, insbesondere ein Vliesstoff der an sich bekannten Art, angeordnet wird, so daß ein unerwünschtes Verrutschen der erfindungsgemäßen Kunststoffbahn relativ zum darunter angeordneten Erdgut und/oder ein unerwünsehtes Verrutschen der auf die erfindungsgemäßen Kunststoffbahn aufgetragenen Schüttgüter zusammen mit dem Geotextil selbst bei den zuvor aufgeführten Böschungssteigungswinkeln nicht stattfindet. Von daher läßt sich die erfindungsgemäße Kunststoffbahn zur dauerhaften Abdichtung bzw. Abdeckung von entsprechenden Steigungen bzw. Böschungen im Tiefbau verwenden, so zum Beispiel zur Abdichtung von geneigten Wandflächen von Wasserläufen oder Wasserbecken oder zur Abdichtung von entsprechenden geneigten Seitenflächen von Deponien. Auch besitzen die auf der Oberfläche (Vorder- und/oder Rückfläche) der erfindungsgemäßen Kunststoffbahn vorgesehenen Erhebungen und Stege selbst bei Einwirkung von extremen Kräften eine dauerhafte Festigkeit, so daß diese Erhebungen bzw. Stege nicht abgeschert werden, wobei diese erhöhte Festigkeit der Stege bzw. der im Stegbereich vorgesehenen Erhebungen darauf zurückgeführt wird, daß sich die Stege und die diesen zugeordneten Erhebungen gegenseitig aussteifen und abstützen. Ferner ist als besonderer Vorteil der erfindungsgemäßen Kunststoffbahn hervorzuheben, daß diese sich einwandfrei und dauerhaft mit einer Nachbarbahn der erfindungsgemäßen Kunststoffbahn verschweißen läßt, wobei diese hervorragende Verschweißbarkeit einerseits darauf zurückgeführt wird, daß die erfindungsgemäße Strukturierung eine relativ feine Strukturierung ist und andererseits hierbei noch genügend Freifläche zwischen den von den Stegen umrandeten Vorder- und/oder Rückflächen bestehen, so daß eine Vielzahl von entsprechenden Kontaktflächen für die thermische Verschweißbarkeit zur Verfügung stehen. Diesen Vorteil weisen insbesondere auch solche Ausführungsformen der bekannten Kunststoffbahn nicht auf, bei denen mittig auf den von den Stegen umrandeten Flächen die entsprechenden Erhebungen vorgesehen sind. Darüber hinaus sind bei der erfindungsgemäßen Kunststoffbahn die Reißfestigkeit und die Reißdehnung höher als bei den bekannten, aus einem identischen Material hergestellten Kunststoffbahnen, wobei diese besseren Reißfestigkeits- und Dehnungswerte bei der erfindungsgemäßen Kunststoffbahn dadurch erklärlich werden, daß hier die von den Stegen umrandeten Flächen nicht durch eine zusätzliche Prägung einer entsprechenden Noppe in ihrer mikro- oder makropolymeren Struktur verändert sind. Überraschend wurde nämlich festgestellt, daß die Prägung derartiger mittiger Nocken bei der bekannten Strukturierung zu einer unerwünschten Schädigung der physikalischen und/oder chemischen Polymerstruktur führen, so daß letztendlich die Dehnungs- und Festigkeitsverluste bei der bekannten Kunststoffbahn im Vergleich zur erfindungsgemäßen Kunststoffbahn erklärlich werden.

Bei einer ersten Ausführungsform der erfindungsgemäßen Kunststoffbahn sind die Erhebungen im Bereich der Schnittpunkte der Stege angeordnet, wobei vorzugsweise alle Schnittpunkte der Stege mit diesen Erhebungen versehen sind. Hier findet die zuvor im Zusammenhang mit der erfindungsgemäßen Kunststoffbahn bereits beschriebene Aussteifung der Erhebungen im besonderen Maße statt, da die Stege die im Schnittpunkt angeordneten Erhebungen zumindestens in vier Richtungen aussteifen.

Grundsätzlich besteht bei der erfindungsgemäßen Kunststoffbahn die Möglichkeit, die auf der Vorder- und/oder Rückfläche der Kunststoffbahn vorgesehen Stege, denen die Vielzahl der Erhebungen zugeordnet ist, beliebig zu gestalten. Hier können beispielsweise die Stege parallel oder unter einem vorgegebenen Winkel zu den Seitenkanten der Kunststoffbahn ausgerichtet sein, wobei jedoch bei einer besonders bevorzugten Ausführungsform der erfindungsgemäßen Kunststoffbahn diese Stege eine Vielzahl von Vielecken, insbesondere eine Vielzahl von Vier- bis Zwölfecken, ausbilden.

Insbesondere dann, wenn bei der erfindungsgemäßen Kunststoffbahn die Stege Rauten ausbilden, die sich symmetrisch und gleichmäßig über die gesamte Vorder- und/oder Rückfläche der Kunststoffbahn erstrecken, besitzt eine derartige Ausführungsform die eingangs bereits bei der erfindungsgemäßen Kunststoffbahn beschriebenen Vorteile in einem erhöhten Maße. Vorzugsweise weisen diese Rauten eine kürzere Diagonale zwischen 5 mm und 8 mm, insbesondere eine kürzere Diagonale von 6,04 mm, und eine längere Diagonale zwischen 6 mm und 8 mm, insbesondere eine längere Diagonale von 7,2 mm, auf, wobei sich insbesondere die kürzere Diagonale in Längsrichtung de Kunststoffbahn und die längere Diagonale in Querrichtung zur Kunststoffbahn erstrecken.

Wie bereits vorstehend ausgeführt ist, kann die erfindungsgemäße Kunststoffbahn wahlweise die zuvor beschriebene Strukturierung auf der Vorderfläche, auf der Rückfläche oder auf der Vorder- und Rückfläche besitzen, wobei die Ausführungsform, bei der sowohl die Vorder- als auch die Rückfläche der Kunststoffbahn mit der zuvor beschriebenen Strukturierung versehen ist, einerseits sicher am Untergrund haftet und andererseits das hierauf aufgetragene Schüttgut, ggf. unter Verwendung eines Geotextils zwischen der entsprechenden Fläche und dem Schüttgut, besonders auch bei starken Neigungen der Kunststoffbahn besonders sicher haltert.

Eine weitere besonders geeignete Ausführungsvariante der erfindungsgemäßen Kunststoffbahn sieht vor, daß die Stege eine Gesamtfläche, jeweils bezogen auf einen Quadratmeter der Vorder- und/oder Rückfläche der Kunststoffbahn, zwischen 25 dm² und 50 dm², insbesondere zwischen 35 dm² und 45 dm², aufweisen. Hierbei ist die Gesamtfläche der Stege so definiert, daß sich diese Gesamtfläche der Stege aus der Summe der Einzelflächen der Schenkel der Stege sowie einer ggf. vorhandenen Stegdeckfläche errechnet.

Überraschend konnte festgestellt werden, daß auch die Ausrichtung der Stegschenkel relativ zur Fläche der Kunststoffbahn einen nicht unerheblichen Einfluß auf die Lage- bzw. Standfixierung der Kunststoffbahn bei geneigten Böschungen hat, wobei grundsätzlich hierzu festzuhalten ist, daß relativ flache Winkel α der Stegschenkel relativ zur Grundfläche der Kunststoffbahn bevorzugt bei relativ geringen Steigungswinkeln der Böschung und relativ steile Winkel α der Stegschenkel relativ zur Grundfläche der Kunststoffbahn bei relativ steilen Böschungen vorgesehen werden. Vorzugsweise konnte jedoch festgestellt werden, daß die Stegschenkel relativ zur Fläche der Kunststoffbahn unter einem Winkel α zwischen 110° und 170°, insbesondere unter einem Winkel α zwischen 120° und 150°, geneigt angeordnet sind, wobei eine vielseitig verwendbare Kunststoffbahn insbesondere einen Winkel α von 130° besitzt.

Bezüglich der Ausgestaltung der zuvor beschriebenen und auf der erfindungsgemäßen Kunststoffbahn vorgesehenen Stege ist festzuhalten, daß diese vorzugsweise einen trapezförmigen Querschnitt aufweisen, wobei insbesondere das Verhältnis der längeren parallelen Seite zur kürzeren parallelen Seite des Trapezes zwischen 1:0,25 und 1:0,4 variiert. Insbesondere dann, wenn die längere parallele Seite des Trapezes auf der Vorder- bzw. Rückfläche der Kunststoffbahn angeordnet ist, so daß dementsprechend die Stege keilförmig aus der Kunststoffbahn herausragen, sind derartige Stege in Verbindung mit den diesen Stegen zugeordneten Erhebungen hervorragend geeignet, die erfindungsgemäße Kunststoffbahn auf jedem beliebigen Untergrund zu fixieren und jedes beliebige Schüttgut auf ihrer Oberfläche auch bei stärkeren Böschungssteigungswinkeln zu haltern.

Wie festgestellt werden konnte, ist es besonders vorteilhaft, wenn bei jedem Steg die längere parallele Seite des Trapezes eine Breite zwischen 0,6 mm und 1 mm und die kürzere parallele Seite des Trapezes eine Breite zwischen 0,15 mm und 0,4 mm aufweist.

Bezüglich der Höhe der Stege ist anzumerken, daß eine besonders haltbare und gut fixierbare Ausgestaltung der erfindungsgemäßen Kunststoffbahn solche Stege aufweist, bei denen die Höhe der Stege insbesondere zwischen 0,3 mm und 0,5 mm liegt.

Bezüglich der Gesamtvolumens der Stege, die auf der Vorder- und/oder Rückfläche der erfindungsgemäßen Kunststoffbahn vorhanden sind, ist festzuhalten, daß das Gesamtvolumen dieser Stege insbesondere zwischen 0,09 dm³ und 1,2 dm³, jeweils bezogen auf einen Quadratmeter der Vorder- und/oder Rückfläche der Kunststoffbahn, liegt.

Eine besonders gute und lagerfeste Fixierungen der erfindungsgemäßen Kunststoffbahn am Untergrund und/oder des auf die erfindungsgemäße Kunststoffbahn aufgebrachten Schüttgutes erlauben solche Ausführungsformen der erfindungsgemäßen Kunststoffbahn, bei denen die Erhebungen eine Gesamtfläche, jeweils bezogen auf einen Quadratmeter der Vorder- und/oder Rückfläche der Kunststoffbahn, zwischen 9 dm² und 18 dm², vorzugsweise zwischen 11 dm² und 16 dm², aufweisen.

Um zu verhindern, daß die Erhebungen, die bei der erfindungsgemäßen Kunststoffbahn den Stegen zugeordnet sind, im Laufe der Verwendung der erfindungsgemäßen Kunststoffbahn beschädigt oder abgeschert werden, konnte festgestellt werden, daß es sich als besonders vorteilhaft erweist, wenn diese Erhebungen relativ zur Vorderfläche oder Rückfläche der Kunststoffbahn unter einem Winkel β zwischen 90° und 140°, vorzugsweise unter einem Winkel β zwischen 100° und 130°, geneigt angeordnet sind.

Eine besonders geeignete und haltbare Ausführungsform der erfindungsgemäßen Kunststoffbahn sieht vor, daß hierbei die Erhebungen eine pyramidenförmige Gestalt aufweisen, wobei insbesondere hierbei auch die Spitze der Pyramide abgerundet und/oder gestaucht sein kann, so daß bei einer Stauchung eine tellerförmig verformte Pyramidenspitze ausgebildet ist. Ebenso ist es möglich und vorteilhaft, wenn die Erhebungen einen sternförmigen Querschnitt besitzen, derart, daß zwei Dreiecksflächen, insbesondere zwei gleichschenklige Dreiecksflächen, unter einem Winkel von 90° derart ineinander versetzt angeordnet sind, daß die äußeren Seitenlinien der ineinander angeordneten Dreiecksflächen die Kanten einer Pyramide ausbilden.

Besonders stabile Erhebungen weisen insbesondere an ihrer Basis eine Breite zwischen 1,2 mm und 1,9 mm, vorzugsweise eine Breite zwischen 1,4 mm und 1,7 mm, auf, wobei insbesondere die Höhe der Erhebungen zwischen 1,0 mm und 1,6 mm, vorzugsweise zwischen 1,1 mm und 1,5 mm, variiert.

Insbesondere dann, wenn die erfindungsgemäße Kunststoffbahn für solche Anwendungsfälle im Tiefbau verwendet wird, bei denen mit einem relativ großen Anfall von Wasser, das über das auf die erfindungsgemäße Kunststoffbahn aufgetragene Schüttgut zur erfindungsgemäßen Kunststoffbahn gelangt, zu rechnen ist, bietet es sich an, daß auf der Rückfläche und insbesondere aber auf der Vorderfläche der Kunststoffbahn Wasserabführungskanäle vorgesehen sind. Hierbei bewirken diese Wasserabführungskanäle, daß das durch das Schüttgut dringende Wasser schnell und unproblematisch abgeführt wird, so daß sich zwischen Schüttgut oder einem darunter angeordneten Geotextil und der Kunststoffbahn kein Wasserfilm ausbilden kann, der die Lagefixierung des Schüttgutes oder der erfindungsgemäßen Kunststoffbahn ggf. gefährden könnte.

Um derartige Wasserabführungskanäle besonders einfach und mit geringem Aufwand erstellen zu können, sieht eine vorteilhafte Weiterbildung der zuvor beschriebenen erfindungsgemäßen Kunststoffbahn vor, daß hierbei in Fließrichtung des Wassers gesehen eine Vielzahl von Aussparungen in den entsprechenden Stegen vorgesehen sind. Mit anderen Worten sind bei dieser Ausführungsform der erfindungsgemäßen Kunststoffbahn die von den Stegen umrandeten Flächen durch die Vielzahl von Aussparungen miteinander verbunden, so daß dementsprechend das Wasser abfließen kann.

Bezüglich der Materialdicke der erfindungsgemäßen Kunststoffbahn ist festzuhalten, daß diese Materialdicke insbesondere zwischen 1,2 mm und 3,2 mm, vorzugsweise zwischen 2 mm und 2,8 mm, variiert. Hierbei kann die erfindungsgemäße Kunststoffbahn aus jedem geeigneten thermoplastischen Kunststoff hergestellt werden, so insbesondere aus Polymere oder Copolymere von Alkylenen, insbesondere auch Polyethylen oder Polypropylenen und vorzugsweise aus HD-PE (High Density Polyethylen).

Um die erfindungsgemäße Kunststoffbahn herzustellen, werden die Stege sowie die Erhebungen, die auf der Vorder- und/oder auf der Rückfläche der erfindungsgemäßen Kunststoffbahn vorgesehen sind, insbesondere durch ein thermischen Prägen der Kunststoffbahn erzeugt.

Die vorliegende Erfindung betrifft desweiteren eine Prägewalze, insbesondere zur Herstellung der zuvor beschriebenen Kunststoffbahn, mit den kennzeichnenden Merkmalen des Patentanspruchs 23.

Die erfindungsgemäße Prägewalze zur Herstellung einer Kunststoffbahn zur Verwendung im Tiefbau, insbesondere zur Basis- oder Endabdeckung einer Deponie und vorzugsweise zur Herstellung der zuvor beschriebenen Kunststoffbahn, weist eine auf dem Mantel der Prägewalze angeordnete Strukturierung auf, derart, daß der Mantel der Prägewalze eine Vielzahl von ersten stegförmig ausgebildeten Vertiefungen sowie eine Vielzahl von zweiten Vertiefungen umfaßt, wobei die zweiten Vertiefungen eine größere Gravurtiefe aufweisen als die ersten Vertiefungen und wobei darüber hinaus noch die zweiten Vertiefungen im Bereich der ersten Vertiefungen angeordnet sind. Mit anderen Worten umfaßt somit die erfindungsgemäße Prägewalze auf ihrer Oberfläche zunächst einmal die eigentliche Mantelfläche, die dann von ersten, stegförmig ausgebildeten Vertiefungen unterbrochen ist, während zweite Vertiefungen desweiteren vorhanden sind, die den ersten Vertiefungen zugeordnet sind. Mit einer derartigen erfindungsgemäßen Prägewalze lassen sich dann insbesondere auch solche Kunststoffbahnen herstellen, wie sie vorstehend umfangreich für die erfindungsgemäßen Kunststoffbahnen beschrieben sind, so daß zur Vermeidung von Wiederholungen auf die dort beschriebenen Dimensionen der Stege und Erhebungen sowie die dort ausführlich erwähnten Winkel verwiesen wird, die analog auch auf die erfindungsgemäße Prägewalze insbesondere zutreffen. Hierbei ist entsprechend zu berücksichtigen, daß eine mit der erfindungsgemäßen Prägewalze hergestellte Kunststoffbahn der Abdruck der Prägewalze in dem thermoplastischen Kunststoffmaterial darstellt, so daß die Höhen der Stege oder Erhebungen, wie sie vorstehend ausführlich genannt sind, bei der Prägewalze dementsprechend als Gravurtiefen zu bezeichnen sind.

Ein wesentlicher Vorteil der erfindungsgemäßen Prägewalze ist darin zu sehen, daß hiermit dauerhaft und ohne nennenswerten Verschleiß solche Kunststoffbahnen insbesondere hergestellt werden können, wie diese vorstehend für die erfindungsgemäße Kunststoffbahn beschrieben sind und die die zuvor erwähnten und ausführlich beschriebenen Vorteile aufweisen.

Insbesondere weist die erfindungsgemäße Prägewalze eine solche Strukturierung auf, bei der die zweiten Vertiefungen im Bereich der Schnittpunkte der ersten Vertiefungen angeordnet sind, wobei insbesondere bevorzugt wird, daß in allen Schnittpunkten der ersten Vertiefungen die zweiten Vertiefungen vorgesehen werden.

Um eine entsprechende Kunststoffbahn mit einer hohen Stand- und Lagesicherheit zur Verfügung zu stellen, sieht eine Weiterbildung der erfindungsgemäßen Prägewalze vor, daß alle ersten Vertiefungen eine Vielzahl von sich über den gesamten Mantel der Prägewalze erstreckenden Vielecken, insbesondere von Vier- bis Zwölfecken, aufweist.

Bei einer bevorzugten Weiterbildung der erfindungsgemäßen Prägewalze bilden alle ersten stegförmigen Vertiefungen eine Vielzahl von identisch geformten Rauten aus, die über den gesamten Mantel der Prägewalze gleichmäßig verteilt sind, wobei jeweils im Schnittpunkt aller ersten stegförmigen Vertiefungen jeweils eine zweite Vertiefung angeordnet ist, so daß mit einer derartigen Prägewalze solche Strukturen hergestellt werden können, wie sie nachfolgend noch bei einem konkreten Ausführungsbeispiel erläutert und in der Zeichnung abgebildet sind.

Insbesondere weist die Prägewalze solche ersten stegförmigen Vertiefungen auf, die mit einem trapezförmigen Querschnitt versehen sind, wobei die längere parallele Seite des Trapezes zur äußeren Oberfläche der Walze weist. Mit anderen Worten sind somit die ersten Vertiefungen als keilförmige Einschnitte ausgebildet, wobei die Spitze bzw. die abgestumpfte Spitze eines derartigen keilförmigen Einschnittes zum Zentrum der Prägewalze weist.

Wie bereits vorstehend bei der erfindungsgemäßen Kunststoffbahn ausgeführt ist, bietet es sich insbesondere an, die zweiten Vertiefungen derart auszugestalten, daß die zweiten Vertiefungen einen pyramidenähnlichen Querschnitt besitzen, wobei die Spitze der Pyramide und insbesondere die abgerundete Spitze der Pyramide zum Zentrum der Prägewalze hin ausgerichtet ist.

Um eine einwandfreie Prägung einer thermoplastischen Kunststoffbahn, insbesondere einer thermoplastischen Kunststoffbahn der eingangs beschriebenen Art, sicherzustellen, sieht eine weitere vorteilhafte Ausführungsform der erfindungsgemäßen Prägewalze vor, daß hierbei die Mantelfläche der Walze und/oder die Wandflächen der ersten und/oder die Wandflächen der zweiten Vertiefungen jeweils mit einer auf den Flächen angeordneten und nach außen weisenden Mikrostrukturierung versehen ist. Diese Mikrostrukturierung bewirkt dann, daß ohne Schwierigkeiten der von einer derartigen Prägewalze geprägte Kunststoff im thermoplastischen Zustand abgezogen werden kann, so daß für diese Abziehung entsprechend reduzierte Kräfte erforderlich sind, was wiederum dazu führt, daß keine unerwünschte Verstreckung und damit auch keine unerwünschte Veränderung der physikalischen und/oder chemischen Struktur der die Kunststoffbahn bildenden Polymeren stattfindet. Von daher wird auch erklärlich, daß die mit der erfindungsgemäßen Prägewalze geprägten Kunststoffbahnen eine hohe Festigkeit und eine ausgezeichnete Dehnung aufweisen, da während der thermischen Prägung aufgrund des fehlenden Anhaftens des Kunststoffes an der Prägewalze hohe Spannungen vermieden werden, die ansonsten zu der zuvor angesprochenen unerwünschten Strukturveränderung des Kunststoffes führen würden. Auch vermeidet eine derartig an ihrer Oberfläche vergüteten Prägewalze das Anhaften von Kunststoffresten auf der Oberfläche oder in den Gravuren, so daß Fehlprägungen selbst bei langen Benutzungszeiten vermieden werden.

Als besonders vorteilhaft hat sich herausgestellt, wenn diese Mikrostrukturierung von einer Vielzahl von Kugeln oder Kugelabschnitten gebildet wird, wobei insbesondere derartige Kugeln oder Kugelabschnitte einen Durchmesser zwischen 1 µm und 6 µm, vorzugsweise zwischen 2 µm und 4 µm, aufweisen.

Die vorliegende Erfindung wird nachfolgend anhand eines konkreten Ausführungsbeispieles in Verbindung mit der Zeichnung näher erläutert. Es zeigen:
- Figur 1: eine schematische Draufsicht auf die Strukturierung der Kunststoffbahn;
- Figur 2: einen Schnitt längs der Linie A-A in Figur 1;
- Figur 3: einen Schnitt längs der Linie B-B in Figur 1;
- Figur 4: eine perspektivische Ansicht der in Figur 1 gezeigten Kunststoffbahn;
- Figur 5: einen Ausschnitt aus dem Mantel einer Prägewalze; und
- Figur 6: eine schematische Schnittansicht durch einen Abschnitt der Mantelfläche der Prägewalze.

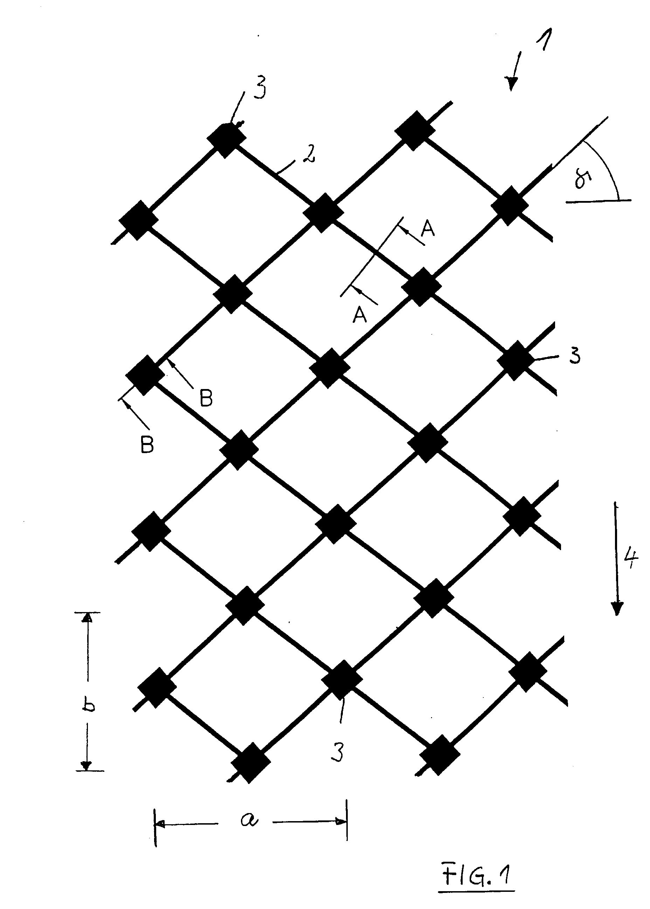

In den Figuren 1 bis 6 sind dieselben Teile mit denselben Bezugsziffern versehen.

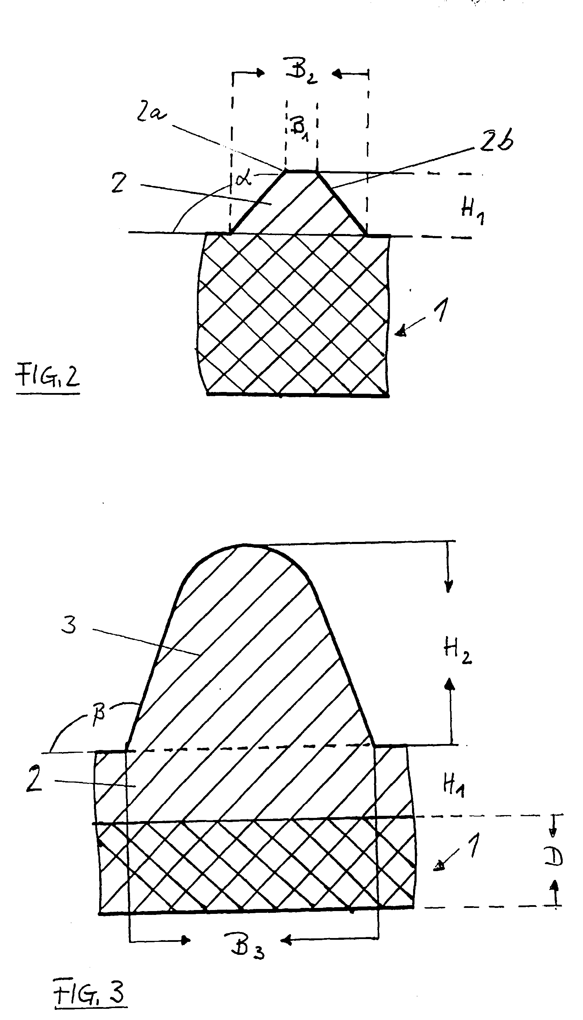

Wie am besten der schematischen Abbildung der Figur 1 zu erkennen ist, weist die Kunststoffbahn, die insgesamt mit 1 bezeichnet ist, auf ihrer Oberfläche eine Strukturierung auf, wobei die Strukturierung aus rautenförmig angeordneten Stegen 2 (Figur 2) und darüber noch hinausragende Erhebungen 3 besteht. Die rautenförmig angeordneten Stege 2 sind relativ zu der mit 4 gekennzeichneten Längsrichtung der Kunststoffbahn 1 unter einem Winkel τ von 40° angeordnet, wobei die längere Diagonale a einer jeden Raute eine Länge von 7,2 mm und die kürzere Diagonale b einer jeden Raute eine Länge von 6,04 mm aufweist.

Die Kunststoffbahn 1 ist auf ihrer Vorder- und Rückseite mit derselben Strukturierung versehen, wie diese in den Figuren 1 bis 3 gezeigt ist. In jedem Eckpunkt einer jeden Raute sind die Erhebungen 3 vorgesehen, wobei die Erhebungen 3 eine pyramidenähnliche Gestaltung besitzen. Die Spitze der Pyramide ist abgerundet, wie dies am besten in Figur 3 zu erkennen ist. Die Stege 2 (Figur 2) besitzen im Querschnitt gesehen die Form eines Trapezes, wobei die längere Grundkante B₂ eine Länge von 0,87 mm und die parallel hierzu verlaufende kürzere Kante B₁ eine Länge von 0,2 mm aufweist. Die Stege ragen mit einer Höhe H₁ von 0,4 mm über die Vorderfläche bzw. Rückfläche der Kunststoffbahn 1 hinaus, wobei die Schenkel 2 a bzw. 2 b der Stege unter einem Winkel α von 130° relativ zur Fläche der Kunststoffbahn angeordnet sind.

Die Erhebungen (Figur 3) besitzen insgesamt eine Höhe (H₂ + H₁) von 1,3 mm, so daß sie relativ zu den Stegen 2, deren Höhe H₁ 0,4 mm beträgt, diese Stege 2 um 0,9 mm (H₂) überragen. Die Breite B₃ der Erhebungen 3 im Bereich ihrer Basis beträgt 1,57 mm, während die Kanten der Erhebungen 3 relativ zur Fläche der Kunststoffbahn 1 unter einem Neigungswinkel β von 110° ausgerichtet sind.

Die Kunststoffbahn 1 weist eine Dicke D von 2,5 mm auf und besteht aus einem HD-PE-Kunststoff (High Density Polyethylen).

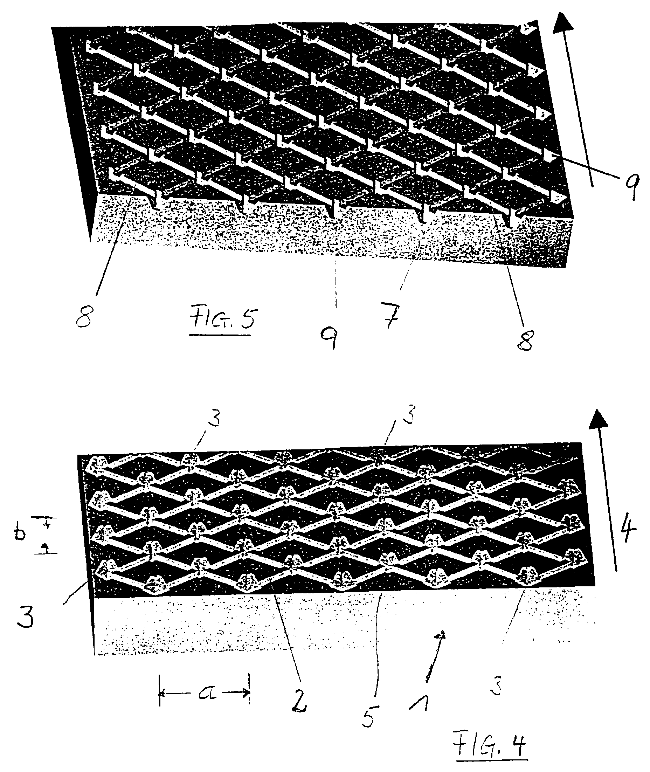

Wie am besten in der perspektivischen Ansicht (Figur 4) der Oberfläche der Kunststoffbahn zu erkennen ist, ragen die Stege 2 mit einer ersten, vorstehend angegebenen Höhe über die Fläche 5 der Kunststoffbahn 1 hinaus, wobei die Fläche 5 die erste Ebene und die Fläche der Stege 2 die zweite Ebene ausbilden. Über diese erste und zweite Ebene weiter hinaus ragen noch die pyramidenähnlich ausgestalteten Erhebungen 3 unter Ausbildung einer dritten Ebene, so daß insgesamt gesehen die Kunststoffbahn 1 drei Ebenen besitzt.

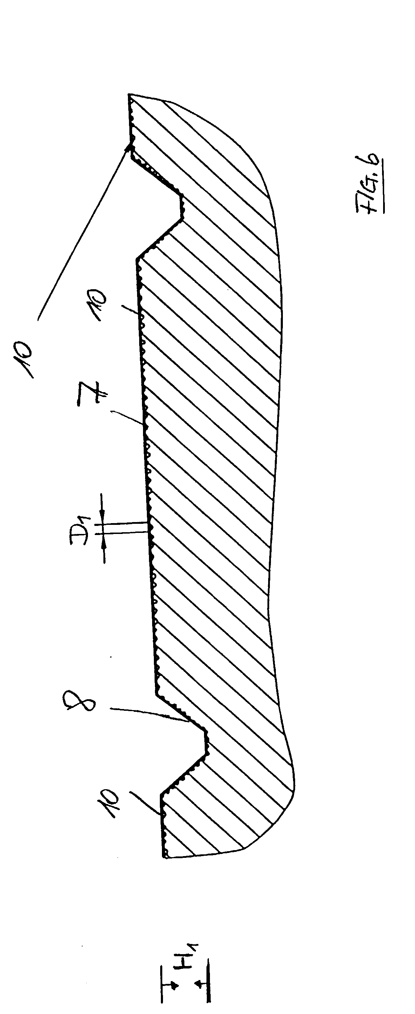

In den Figuren 5 und 6 sind jeweils ein Ausschnitt einer Prägewalze abgebildet, wobei die Prägewalze einen Mantel 7 aufweist, der entsprechend strukturiert ist.

In dem Mantel 7 der Prägewalze sind eine Vielzahl von ersten stegförmigen Vertiefungen 8 angeordnet, wobei diese stegförmigen Vertiefungen 8 eine Vielzahl von Rauten bilden, die identisch ausgestaltet sind und sich gleichmäßig über die gesamte Mantelfläche 7 der Prägewalze erstrecken. Die geometrischen Abmessungen der ersten Vertiefungen entsprechen den Abmessungen, wie diese vorstehend bereits für die Strukturierung der Kunststoffbahn beschrieben sind. Desweiteren weist die Mantelfläche 7 der Prägewalze eine Vielzahl von zweiten Vertiefungen 9 auf, wobei die Gravurtiefe dieser zweiten Vertiefung größer ist als die Gravurtiefe der ersten Vertiefungen und konkret der vorstehend beschriebenen Summe der Größen von H₁ und H₂ entspricht. Auch diese zweiten Vertiefungen sind so ausgestaltet, wie dies vorstehend am Beispiel der Figur 3 beschrieben ist.

Wie insbesondere der Schnittansicht der Figur 6, die einen Schnitt durch einen Abschnitt der Mantelfläche 7 darstellt, zu entnehmen ist, sind die Oberfläche der Mantelfläche 7 und die gesamten Flächen der ersten Vertiefungen 8 mit einer Mikrostrukturierung versehen, wobei diese Mikrostrukturierung die gesamten Flächen abdeckt und eine Perlstruktur aus Kugeln bzw. Kugelabschnitten umfaßt. Diese Kugeln bzw. Kugelabschnitte weisen einen Durchmesser D₁ zwischen 2 µm und 4 µm auf, wobei diese Mikrostrukturierung wirksam verhindert, daß hohe Abzugskräfte der Kunststoffbahn während des Prägens auftreten oder daß Verschmutzungsreste von Kunststoff auf der Prägewalze haften bleiben.

Um den Nachweis zu bringen, daß die zuvor genannte und im Detail in Verbindung mit der Zeichnung (Figuren 1 bis 4) beschriebene Kunststoffbahn auch tatsächlich die insbesondere bei einer Verbauung in Deponien mit entsprechenden Böschungswinkeln erforderliche Stand- und Lagefestigkeit besitzt, so daß weder ein Verrutschen der Kunststoffbahn selbst gegenüber den hierunter angeordneten Erdstoffen noch ein Verrutschen eines Geotextils, das zwischen der Kunststoffbahn und den zu deponierenden Stoffen angeordnet wird, stattfindet, wurden Reibungsversuche zwischen einem bindigen Erdstoff und den in der Zeichnung wiedergegebenen Kunststoffbahn und Reibungsversuche zwischen einem Geotextil und der Oberfläche der Kunststoffbahn durchgeführt.

Die grundsätzliche Versuchsdurchführung für die Reibungsversuche erfolgte gemäß Empfehlung GDA E3-8 (Gartung, E. Neff, H.K.- Empfehlungen des Arbeitskreises Geotechnik der Deponiebauwerke der Deutschen Gesellschaft für Geotechnik e.V., Bautechnik 74 (1997, H. 9, S. 564 ff.) und gemäß dem Entwurf der DIN EN ISO 12957-1 (Geotextilien und geotextilverwandte Produkte, Bestimmung der Reibungseigenschaften, Teil 1: Scherkastenversuch, April 1998).

Als bindiger Erdstoff wurde ein mittelplastischer Ton aus der Tonaufbereitung "Iduna Hall" verwendet (Tonaufbereitung Fa. AVG GmbH & Co. KG, Oberhausen). Die Proctordichte betrug ca. 1,66 g/cm³ bei einem optimalen Wassergehalt von etwa 22 %. Der Ton wurde mit einem Verdichtungsgrad von 95 % auf dem "nassen Ast" der Proctorkurve in das Prüfgerät eingebaut. Die diesem Verdichtungsgrad zugehörige Trockendichte betrug rund 1,56 g/cm³ bei einem Wassergehalt von rund 25 %.

Die Reibungsversuche wurden in einem Rahmenschergerät mit etwa 10 cm x 10 cm großen Prüfflächen und mit frei aufliegendem oberen Rahmen durchgeführt. Als Normalspannungen wurden 50, 10, 150 und 200 kN/m² aufgetragen, wobei die Auflasten über ein Joch mit Totlast und Hebelübertragung auf die Lastplatte aufgebracht worden ist. Die resultierenden Reibungskräfte wurden mit einer elektronischen Kraftmeßdose gemessen und in Reibungsspannungen bei Annahme einer gleichmäßigen Verteilung über die Fläche umgerechnet.

Die Prüfflächen der Kunststoffbahn wurden im unteren Rahmen auf eine starre Unterlage aufgeklebt.

Der Ton wurde gemäß der zuvor genannten Empfehlung GDA E3-8 in einer Schichtdicke von etwa 2,0 cm in den oberen Rahmen eingebaut.

Die Ergebnisse der Reibungsversuche sind in der Abbildung 1 und Abbildung 2 als Reibungsspannungs-Verschiebungslinien aufgetragen. Diese Abbildungen enthalten zudem Angaben zur Konsolidierungsdauer, zu den Ein- und Ausbauwassergehalten und -dichten der Teilproben sowie zu weiteren Versuchsrandbedingungen. Zudem sind die Daten der Reibungsspannungen für den Gleitzustand bei 7 mm Verschiebung im Reibungsspannungs-Normalspannungsdiagramm (Abbildung 2) angegeben. In Tabelle 1 sind diese Reibungsspannungswerte zusammengestellt, die für vergleichende Bewertungen maßgebend sind. Weiter wurden mit diesen Daten auch lineare Regressions-Reibungsparameter ermittelt und in der Abbildung 2 angegeben.

**Tabelle 1**

| gemessene Reibungsspannungswerte im Gleitzustand bei 7 mm Verschiebung - Schichtgrenze Ton "Iduna Hall" ./. Kunststoffbahn, wie vorstehend beschrieben und in den Figuren 1 bis 4 gezeigt | |
|---|---|
| Normalspannung in kN/m² | Reibungsspannung bei 7 mm Verschiebung in kN/m² |
| 50 | 42,8 |
| 100 | 58,1 |
| 150 | 82,5 |
| 200 | 100,0 |

Es wurde ein weiterer Reibungsversuch für die Schichtgrenze zwischen einem Geotextil und der zuvor im Detail beschriebenen und in den Figuren 1 bis 4 gezeigten Kunststoffbahn durchgeführt. Bei dem Geotextil handelte es sich um ein PP-Vliesstoff mit einem Flächengewicht von etwa 1.200 g/m² (Hersteller: Fa. Huesker Synthetic GmbH & Co., Gescher), das unter der Bezeichnung "B 1200 O" im Handel erhältlich ist. Die Größe der Prüfflächen betrug etwa 30 cm x 30 cm, während die Versuchsdurchführung so erfolgte, wie diese zuvor unter Hinweis auf die konkreten Veröffentlichungen beschrieben sind.

Die Probekörper der Kunststoffbahn wurden im unteren Rahmen auf eine starre Unterlage aufgeklebt. Die Probekörper des Geotextils wurden am oberen Rahmen allseitig befestigt. Der obere Rahmen wurde auf die Kunststoffbahn aufgelegt und durch Stellschrauben so fixiert, daß Zwängungen des Vliesstoffes zwischen dem oberen Rahmen und der Kunststoffdichtungsbahn auszuschließen waren. Oberhalb des Vliesstoffes wurde Normalsand gemäß DIN EN 196-1 in einer Schichtdicke von etwa 2 cm eingebaut.

Die Versuche wurden mit trockenen Prüfmaterialien ohne Zugabe von Wasser bei einer mittleren Raumtemperatur von 20 °C und einer relativen Luftfeuchte von 60 bis 65 % durchgeführt. Die Vorbelastungszeit des Prüfsystems betrug ca. 15 Minuten. Die Prüfgeschwindigkeit betrug 0,167 mm/min = 10 mm/h.

Die Ergebnisse der Reibungsversuche sind in den Abbildungen 3 und 4 als Reibungsspannungs-Verschiebungslinien aufgetragen. Zudem sind die Daten der Reibungsspannung für den Bruchzustand und für den Gleitzustand bei 100 mm Verschiebung im Reibungsspannungs-Normalspannungsdiagramm dargestellt. Die Angaben basieren auf linearen Regressionsanalysen. Sie gelten nur für den Spannungsbereich von 50 bis 200 kN/m². In Tabelle 2 sind diese Reibungsspannungswerte zusammengestellt.

**Tabelle 2**

| gemessene Reibungsspannungswerte im Bruchzustand und im Gleitzustand bei 100 mm Verschiebung für das System Geotextil ./. Kunststoffbahn gemäß Figuren 1 bis 4 | | |
|---|---|---|
| Normalspannung in kN/m² | Reibungsspannung in kN/m² | Bruchzustand bei 100 mm Verschiebung |
| 50 | 59,3 | 45,0 |
| 100 | 84,8 | 65,8 |
| 200 | 140,1 | 101,0 |

Die vorstehend in den Tabellen 1 und 2 wiedergegebenen und in den Abbildungen 1 bis 4 dargestellten Meßergebnisse der erfindungsgemäßen Kunststoffbahn belegen, daß die in der vorliegenden Anmeldung beanspruchte erfindungsgemäße Kunststoffbahn eine hervorragende Standfestigkeit gegenüber dem Untergrund besitzt, während hierauf aufgetragene und zu deponierende Schüttgüter von der Kunststoffbahn selbst sicher gehaltert und gegen ein unerwünschtes Verschieben stabilisiert werden. Insbesondere beweisen die in Tabelle 1 wiedergegebenen und in den Abbildungen 1 und 2 dargestellten Meßergebnisse, daß die Kunststoffbahn gegenüber den darunter angeordneten Erdschichten einen Reibungswert besitzt, der etwa dem inneren Reibungswert des Tones selbst entspricht, wobei als Ursache hierfür die auf der erfindungsgemäßen Kunststoffbahn vorgesehene und vorstehend im Detail beschriebene Strukturierung angesehen wird, die sich unterschiedlich tief bei einer Verlegung der Kunststoffbahn in die darunter angeordneten Erdschichten eingräbt und so eine hier ggf. vorhandene oder sich ausbildende Schichtstruktur unterbricht, was weiterhin die Stand- bzw. Lagefestigkeit der erfindungsgemäßen Kunststoffbahn verbessert.

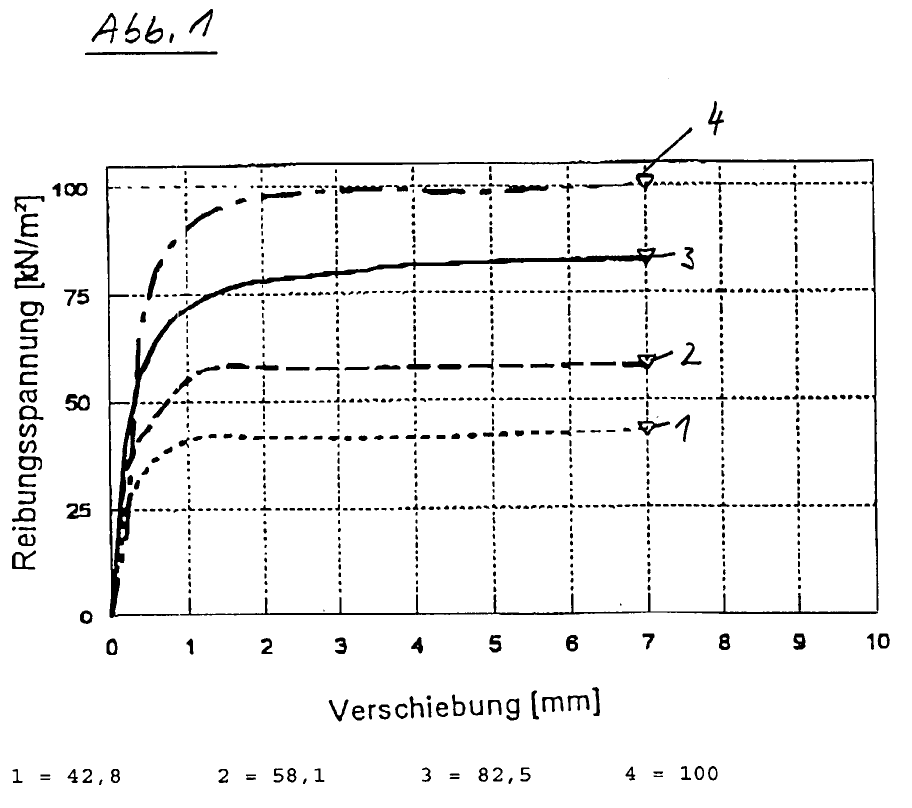

### Einbaukennwerte:

W = 25 %
P_{f} = 1,95 g/cm³
P_{d} = 1,56 g/cm³
Prüffläche (konstant): 10 cm x 10 cm
Prüfgeschwindigkeit: v = 0,0167 mm/min
Konsolidierungszeit: 48 h Versuch ohne Wasser

| Normalspannung: | Ausbauwassergehalt: |
|---|---|
| 200 kN/m² | 20 % |
| 150 kN/m² | 21 % |
| 100 kN/m² | 21 % |
| 50 kN/m² | 22 % |

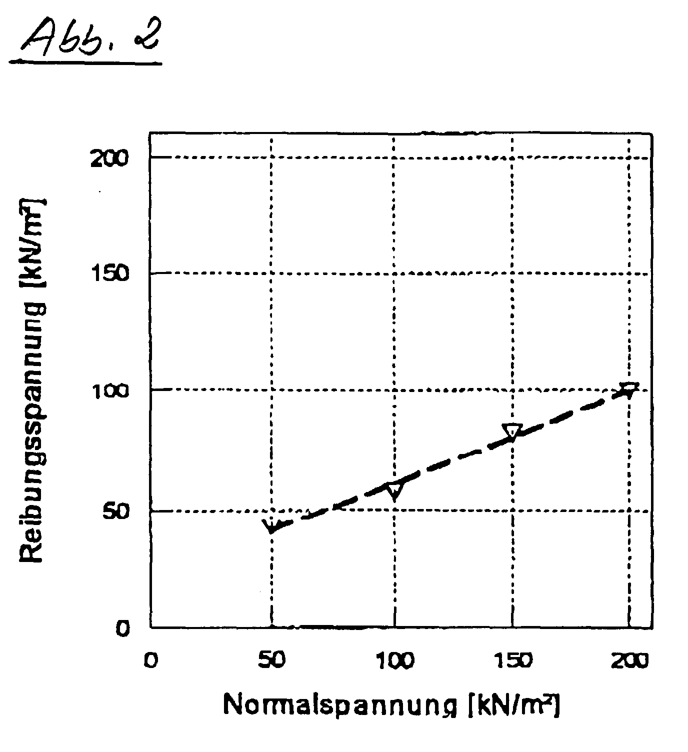

Für Normalspannungen von 50 bis 200 kN/m²
- Gleitwert:: δ = 21°
- a=: (21) kN/m²

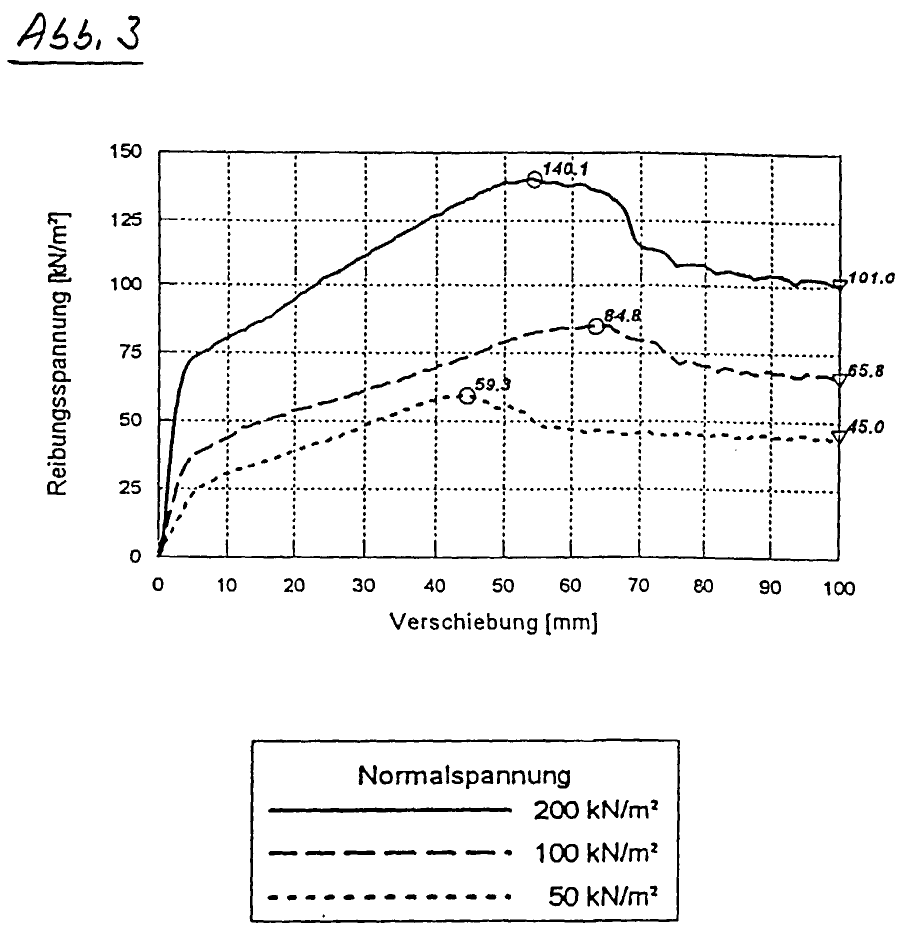

Prüffläche (konstant:)30 cm x 30 cm
Prüfgeschwindigkeit: v = 0,167 mm/min
Konsolidierungszeit: rd. 15 min
Versuch ohne Wasser

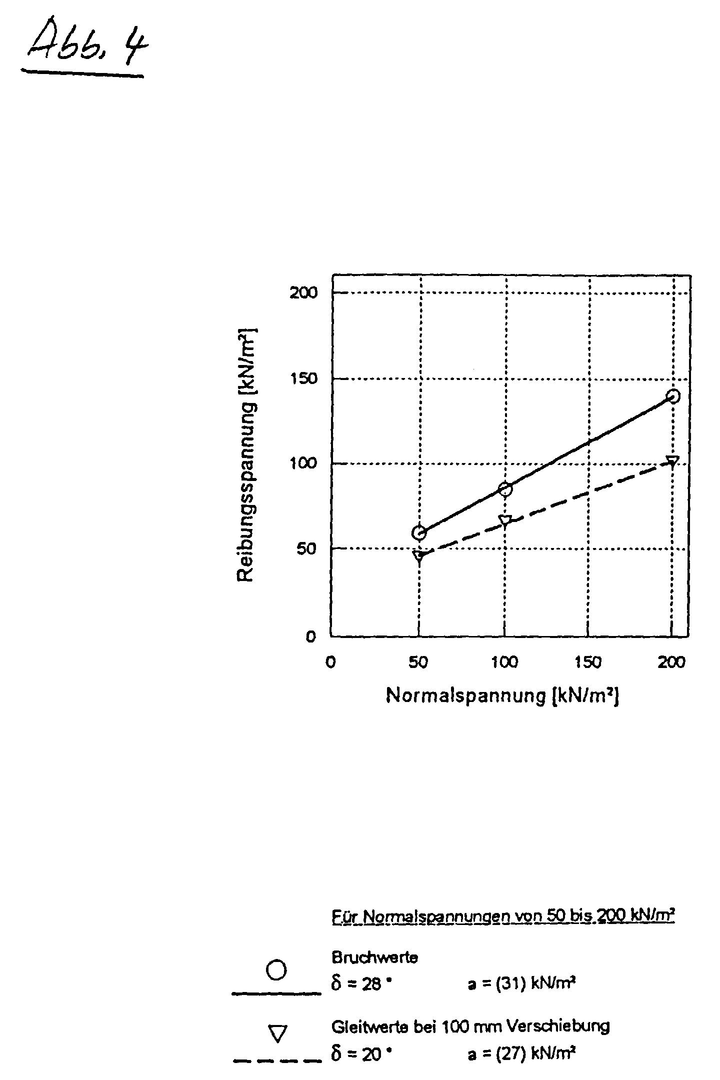

## Patentansprüche

1. Kunststoffbahn zur Verwendung im Tiefbau, insbesondere zur Basis- oder Endabdeckung einer Deponie, mit einer auf der Vorder- und/oder Rückfläche der Kunststoffbahn angeordneten Strukturierung, die eine Vielzahl von über die Fläche verteilten und hierüber herausragenden Stegen und eine Vielzahl von über den Stegen noch hinausragenden Erhebungen aufweist, dadurch gekennzeichnet, daß die Erhebungen (3) im Bereich der Stege (2) angeordnet sind.

2. Kunststoffbahn nach Anspruch 1, dadurch gekennzeichnet, daß die Erhebungen (3) im Bereich der Schnittpunkte der Stege (2) angeordnet sind.

3. Kunststoffbahn nach Anspruch 2, dadurch gekennzeichnet, daß alle Schnittpunkte der Stege (2) die Erhebungen (3) ausbilden.

4. Kunststoffbahn nach einem der vorangehenden Ansprüche, dadurch gekennzeichnet, daß die Stege (2) eine Vielzahl von Vielecken, insbesondere von Vier- bis Zwölfecken, ausbilden.

5. Kunststoffbahn nach Anspruch 4, dadurch gekennzeichnet, daß die Stege (2) Rauten ausbilden, die sich über die gesamte Vorder- und/oder Rückfläche der Kunststoffbahn (1) erstrecken.

6. Kunststoffbahn nach einem der vorangehenden Ansprüche, dadurch gekennzeichnet, daß die Vorder- und Rückfläche der Kunststoffbahn (1) mit Stegen (2) und/oder Erhebungen (3) versehen sind.

7. Kunststoffbahn nach einem der vorangehenden Ansprüche, dadurch gekennzeichnet, daß die Stege (2) eine Gesamtfläche, jeweils bezogen auf einen Quadratmeter der Vorder- oder Rückfläche der Kunststoffbahn (1), zwischen 25 dm² und 50 dm², insbesondere zwischen 35 dm² und 45 dm², aufweisen.

8. Kunststoffbahn nach einem der vorangehenden Ansprüche, dadurch gekennzeichnet, daß die Stegschenkel relativ zur Fläche der Kunststoffbahn (1) unter einem Winkel α zwischen 110° und 170°, vorzugsweise unter einem Winkel α zwischen 120° und 150°, geneigt angeordnet sind.

9. Kunststoffbahn nach einem der vorangehenden Ansprüche, dadurch gekennzeichnet, daß die Stege (2) einen trapezförmigen Querschnitt aufweisen, wobei das Verhältnis der längeren parallelen Seite (B₂) zur kürzeren parallelen Seite (B₁) des Trapezes zwischen 1:0,25 und 1:0,4 variiert.

10. Kunststoffbahn nach Anspruch 9, dadurch gekennzeichnet, daß die längere parallele Seite (B₂) eine Breite zwischen 0,6 mm und 1 mm und die kürzere parallele Seite (B₁) eine Breite zwischen 0,15 mm und 0,4 mm aufweist.

11. Kunststoffbahn nach einem der vorangehenden Ansprüche, dadurch gekennzeichnet, daß die Höhe (H₁) der Stege (2) zwischen 0,3 mm und 0,5 mm liegt.

12. Kunststoffbahn nach einem der vorangehenden Ansprüche, dadurch gekennzeichnet, daß die Stege (2) ein Gesamtvolumen von 0,09 dm³ und 1,2 dm³, jeweils bezogen auf einen Quadratmeter der Vorder- und/oder Rückfläche der Kunststoffbahn (1), besitzen.

13. Kunststoffbahn nach einem der vorangehenden Ansprüche, dadurch gekennzeichnet, daß die Erhebungen (3) eine Gesamtfläche, jeweils bezogen auf einen Quadratmeter der Vorder- und/oder Rückfläche der Kunststoffbahn (1), zwischen 9 dm² und 18 dm², insbesondere zwischen 11 dm² und 16 dm², aufweist.

14. Kunststoffbahn nach einem der vorangehenden Ansprüche, dadurch gekennzeichnet, daß die Erhebungen (3) relativ zur Fläche der Kunststoffbahn unter einem Winkel β zwischen 90° und 140°, vorzugsweise unter einem Winkel β zwischen 100° und 130°, geneigt angeordnet sind.

15. Kunststoffbahn nach einem der vorangehenden Ansprüche, dadurch gekennzeichnet, daß die Erhebungen (3) eine pyramidenförmige Gestalt aufweisen.

16. Kunststoffbahn nach einem der vorangehenden Ansprüche, dadurch gekennzeichnet, daß die Erhebungen (3) eine abgerundete und/oder gestauchte Spitze aufweisen.

17. Kunststoffbahn nach einem der vorangehenden Ansprüche, dadurch gekennzeichnet, daß die Erhebungen (3) an ihrer Basis (B₃) eine Breite zwischen 1,2 mm und 1,9 mm, vorzugsweise zwischen 1,4 mm und 1,7 mm, aufweisen.

18. Kunststoffbahn nach einem der vorangehenden Ansprüche, dadurch gekennzeichnet, daß die Höhe (H₂) der Erhebungen (3) zwischen 0,6 mm und 1,6 mm, vorzugsweise zwischen 1,1 mm und 1,5 mm, liegt.

19. Kunststoffbahn nach einem der vorangehenden Ansprüche, dadurch gekennzeichnet, daß auf der Vorderfläche und/oder der Rückfläche der Kunststoffbahn (1) Wasserabführungskanäle vorgesehen sind.

20. Kunststoffbahn nach Anspruch 19, dadurch gekennzeichnet, daß die Wasserabführungskanäle dadurch ausgebildet sind, daß in Fließrichtung des Wassers eine Vielzahl von Aussparungen in den entsprechenden Stegen vorgesehen sind.

21. Kunststoffbahn nach einem der vorangehenden Ansprüche, dadurch gekennzeichnet, daß die Kunststoffbahn (1) eine Dicke zwischen 1,2 mm und 3,2 mm, insbesondere zwischen 2 mm und 2,8 mm, aufweist.

22. Kunststoffbahn nach einem der vorangehenden Ansprüche, dadurch gekennzeichnet, daß die Stege (2) und die Erhebungen (3) durch Prägen der Kunststoffbahn erzeugt sind.

23. Prägewalze zur Herstellung einer Kunststoffbahn zur Verwendung im Tiefbau, insbesondere zur Basis- oder Endabdeckung einer Deponie, mit einer auf dem Mantel der Prägewalze angeordneten Strukturierung, dadurch gekennzeichnet, daß der Mantel (1) der Prägewalze eine Vielzahl von ersten stegförmig ausgebildeten Vertiefungen (8) sowie eine Vielzahl von zweiten Vertiefungen (9) aufweist, daß die zweiten Vertiefungen (9) eine größere Gravurtiefe aufweisen als die ersten Vertiefungen (8) und daß die zweiten Vertiefungen (9) im Bereich der ersten Vertiefungen (8) angeordnet sind.

24. Prägewalze nach Anspruch 23, dadurch gekennzeichnet, daß die zweiten Vertiefungen (9) im Bereich der Schnittpunkte der ersten Vertiefungen (8) angeordnet sind.

25. Prägewalze nach Anspruch 24, dadurch gekennzeichnet, daß in allen Schnittpunkten der ersten Vertiefungen (8) die zweiten Vertiefungen (9) vorgesehen sind.

26. Prägewalze nach einem der Ansprüche 23 bis 25, dadurch gekennzeichnet, daß alle ersten Vertiefungen (8) eine Vielzahl von sich über den gesamten Mantel (7) der Prägewalze erstreckenden Vielecken, insbesondere von Vier- bis Zwölfecken, ausbilden.

27. Prägewalze nach einem der Ansprüche 23 bis 26, dadurch gekennzeichnet, daß alle ersten Vertiefungen (8) eine Vielzahl von identisch geformten Rauten ausbilden, die über den gesamten Mantel (7) gleichmäßig verteilt sind, und daß jeweils im Schnittpunkt aller ersten Vertiefungen (8) jeweils eine zweite Vertiefung (9) angeordnet ist.

28. Prägewalze nach einem der Ansprüche 23 bis 27, dadurch gekennzeichnet, daß die ersten Vertiefungen (8) einen trapezförmigen Querschnitt aufweisen, derart, daß die langen parallelen Seiten des Trapezes zur äußeren Mantelfläche der Walze weisen.

29. Prägewalze nach einem der vorangehenden Ansprüche 23 bis 28, dadurch gekennzeichnet, daß die zweiten Vertiefungen (9) einen pyramidenähnlichen Querschnitt besitzen, wobei die Grundflächen der Pyramiden zur äußeren Mantelfläche der Walze weisen.

30. Prägewalze nach einem der Ansprüche 23 bis 29, dadurch gekennzeichnet, daß die Mantelfläche (7) der Walze, die Wandfläche der ersten Vertiefung (8) und/oder die Wandflächen der zweiten Vertiefung (9) jeweils mit einer auf den Flächen angeordneten und nach außen weisenden Mikrostrukturierung (10) versehen sind.

31. Prägewalze nach Anspruch 30, dadurch gekennzeichnet, daß die Mikrostrukturierung (10) von einer Vielzahl von Kugeln oder Kugelabschnitten gebildet ist.

32. Prägewalze nach Anspruch 30 oder 31, dadurch gekennzeichnet, daß die die Kugeln oder Kugelabschnitte einen Durchmesser zwischen 0,001 mm und 0,006 mm, vorzugsweise zwischen 0,002 mm und 0,004 mm, aufweisen.
